# EUROPÄISCHE PATENTSCHRIFT

(11) **EP 3 220 148 B1**
(45) Veröffentlichungstag und Bekanntmachung des Hinweises auf die Patenterteilung: **15.07.2020**
(21) Anmeldenummer: 16160976.3
(22) Anmeldetag: 17.03.2016
(51) Int. Cl.: G01N 35/00, B25J 13/08, B01L 9/00, G01D 5/14

(54) **VERFAHREN ZUR ÜBERWACHUNG DES TRANSPORTS VON FLÜSSIGKEITSBEHÄLTERN IN EINEM AUTOMATISCHEN ANALYSEGERÄT**
METHOD FOR MONITORING THE TRANSPORT OF LIQUID CONTAINERS IN AN AUTOMATIC ANALYZER
PROCEDE DE SURVEILLANCE DU TRANSPORT DE CONTENEURS DE LIQUIDES DANS UN APPAREIL D'ANALYSE AUTOMATIQUE

(43) Veröffentlichungstag der Anmeldung: 20.09.2017
(73) Patentinhaber: Siemens Healthcare Diagnostics Products GmbH, 35041 Marburg (DE)
(72) Erfinder: Bernhard, Joachim, 61184 Karben (DE); Korn, Matthias, 56355 Nastaetten (DE); Schmiedeskamp, Joerg, 65193 Wiesbaden (DE); Verhalen, Christian, 65201 Wiesbaden (DE); Wiedekind-Klein, Alexander, 56812 Cochem (DE)

(56) Entgegenhaltungen:
- EP-A1- 2 181 814
- EP-A1- 2 705 929
- EP-A2- 2 308 588
- WO-A1-2004/067233
- US-A- 5 945 798
- US-A1- 2014 145 458

## Beschreibung

Die vorliegende Erfindung liegt auf dem Gebiet der automatischen Analysegeräte und betrifft ein Verfahren zur Überwachung des automatischen Transports eines Flüssigkeitsbehälters sowie ein Verfahren zur Überprüfung der Funktionsfähigkeit der Vorrichtung zum Transport eines Flüssigkeitsbehälters.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten, erfolgt vielfach, indem ein Aliquot einer Körperflüssigkeit eines Patienten gleichzeitig oder nacheinander mit einer oder mehreren Reagenzflüssigkeiten in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Für den räumlichen Transfer von Flüssigkeitsbehältern sind häufig Greifer zum Erfassen, Halten und Freigeben eines Flüssigkeitsbehälters vorgesehen, die über ein flexibles Verbindungselement an einem horizontal und vertikal bewegbaren Transferarm befestigt sind. In der EP-A2-2308588 ist eine beispielhafte Vorrichtung zum Transfer von röhrchenförmigen Reaktionsgefäßen (Küvetten) innerhalb eines automatischen Analysegeräts beschrieben. Die Vorrichtung weist einen passiven, elastisch verformbaren Greifer zum kraftschlüssigen Erfassen und Halten eines Flüssigkeitsbehälters auf und eignet sich, eine einzelne, in einer Aufnahmeposition platzierte Küvette aufzunehmen, diese an eine Zielposition zu transportieren und sie dort in einer weiteren Aufnahmeposition abzusetzen.

Weitere beispielhafte Vorrichtungen sind in folgenden Publikationen zu finden: US 5945798, WO 2004/067233 und US 2014/145458 zeigen einen aktiven Greifer mit Sensor zum Erfassen, ob ein Gegenstand ergriffen wurde. EP2181814 zeigt eine Sensorvorrichtung, die dazu verwendet wird, den Behälter vor Beschädigung zu schützen. EP2705929 zeigt eine Vorrichtung mit gleichem Aufbau wie in der EP2308588, wobei nur gezeigt wird, wie die Vorrichtung kalibriert wird.

Im Wesentlichen umfasst der in der EP-A2-2308588 beschriebene Transport eines Flüssigkeitsbehälters mit dem über ein flexibles Verbindungselement an einem automatisch verfahrbaren Transferarm befestigten Klemmgreifer die Schritte:
a) horizontales Verfahren des Klemmgreifers zur Herstellung einer Klemmverbindung zwischen dem Klemmgreifer und dem Flüssigkeitsbehälter in einer Startposition;
b) Anheben des Klemmgreifers zur Entnahme des Flüssigkeitsbehälters aus der Startposition;
c) horizontales Verfahren des Klemmgreifers an eine Zielposition;
d) Absenken des Klemmgreifers zur Positionierung des Flüssigkeitsbehälters in der Zielposition; und
e) horizontales Verfahren des Klemmgreifers zum Lösen der Klemmverbindung.

Zur Aufnahme oder mit anderen Worten zum Erfassen eines in einer Aufnahmeposition (Startposition) aufrecht stehenden Flüssigkeitsbehälters wird der Klemmgreifer durch eine horizontale Bewegung des Transferarms seitlich an den Flüssigkeitsbehälter herangeführt und gegen diesen gedrückt, bis sich der Klemmgreifer öffnet und den Flüssigkeitsbehälter kraftschlüssig umschließt. Durch eine Aufwärtsbewegung des Transferarms wird der vom Klemmgreifer gehaltene Flüssigkeitsbehälter aus der Aufnahmeposition gehoben und kann nun an eine beliebige Zielposition im Analysegerät, beispielsweise zu einer Aufnahmeposition in einer Messstation transportiert werden. Zur Abgabe oder mit anderen Worten zur Freigabe des Flüssigkeitsbehälters in der Zielposition wird der Flüssigkeitsbehälter zunächst durch eine Abwärtsbewegung des Transferarms in die Aufnahmeposition abgesenkt, und der Klemmgreifer wird durch eine horizontale Bewegung des Transferarms seitlich von dem Flüssigkeitsbehälter weggezogen. Dadurch wird der Flüssigkeitsbehälter gegen die Innenwand der Aufnahmeposition gedrückt und übt eine Kraft auf den Klemmgreifer aus, der sich schließlich bei weiterem Verfahren öffnet und den Flüssigkeitsbehälter freigibt.

Ein erstes Problem ist, dass es bei einem solchen Transport von Flüssigkeitsbehältern passieren kann, dass es beim Ergreifen, während des Transports selbst oder auch beim Abstellen des Behälters zu einem Fehler kommt, und der Behälter verloren geht. Ein Behälter kann beispielsweise umfallen oder aus einer Transportvorrichtung herausfallen und auf diese Weise unkontrolliert irgendwo im Inneren des Analysegeräts zu liegen kommen. Dabei kann es, insbesondere wenn es sich um unverschlossene Flüssigkeitsbehälter handelt, wie beispielsweise Reaktionsgefäße, durch aus dem Behälter herausspritzende oder herauslaufende Flüssigkeit zu weitreichenden Verschmutzungen im Inneren des Analysegeräts kommen. Besonders problematisch ist, dass verspritzende Flüssigkeit auch in andere Flüssigkeitsbehälter, wie beispielsweise andere Reaktionsgefäße oder Reagenzflüssigkeitsbehälter, gelangen kann, wodurch die darin enthaltenen oder darin abzugebenden Flüssigkeiten verunreinigt werden. Da die Messung einer verunreinigten Probe oder die Verwendung eines verunreinigten Reagenzes zu fehlerhaften Messergebnissen führen kann, ist es notwendig sicher zu stellen, dass der Verlust eines Flüssigkeitsbehälters vom Analysegerät automatisch erkannt wird, damit ein Benutzer über den Vorfall informiert werden kann.

Die erste der vorliegenden Erfindung zugrundeliegende Aufgabe besteht also darin, ein Verfahren zur Überwachung des eingangs beschriebenen Transportvorgangs bereit zu stellen, mit dem festgestellt werden kann, ob ein Fehler, wie zum Beispiel ein Verlust des Flüssigkeitsbehälters, während des Transports aufgetreten ist.

Die Aufgabe wird erfindungsgemäß dadurch gelöst, dass zumindest während des horizontalen Verfahrens des Klemmgreifers zur Herstellung der Klemmverbindung und/oder während des horizontalen Verfahrens des Klemmgreifers zum Lösen der Klemmverbindung kontinuierlich ein Abstand des Klemmgreifers zu dem Transferarm gemessen wird. Wenn festgestellt wird, dass
i) während des horizontalen Verfahrens des Klemmgreifers zur Herstellung der Klemmverbindung zwischen dem Klemmgreifer und dem Flüssigkeitsbehälter in der Startposition oder
ii) während des horizontalen Verfahrens des Klemmgreifers zum Lösen der Klemmverbindung in einer Zielposition

keine Änderung des Abstands des Klemmgreifers zu dem Transferarm gemessen wurde, wird ein Signal erzeugt, das anzeigt, dass ein Fehler während des Transports des Flüssigkeitsbehälters aufgetreten ist. Dieses Signal kann zum Beispiel dafür verwendet werden, einem Benutzer anzuzeigen, dass ein Fehler vorliegt, der gegebenenfalls durch ein Eingreifen des Benutzers behoben werden kann.

Bei der Aufnahme sowie bei der Abgabe des Flüssigkeitsbehälters wird die Kraft, die durch den starren Flüssigkeitsbehälter auf den Klemmgreifer ausgeübt wird, so groß, dass der Klemmgreifer durch die flexible Aufhängung relativ zum Transferarm kippt, wodurch sich der Abstand zwischen Klemmgreifer und Transferarm messbar ändert. Erst wenn der Klemmgreifer aufschnappt und den Flüssigkeitsbehälter erfasst oder freigibt und keine Druckkraft mehr auf den Klemmgreifer wirkt, kehrt der Klemmgreifer in seine ursprüngliche Position relativ zum Transferarm zurück und damit wieder in den ursprünglichen Abstand. Wird hingegen die erwartete Abstandsänderung nicht gemessen, zeigt dies an, dass die Aufnahme oder die Abgabe des Flüssigkeitsbehälters fehlgeschlagen ist und deshalb ein Fehler vorliegt, wie zum Beispiel der Verlust des Behälters. Wird zum Beispiel die während des horizontalen Verfahrens des Klemmgreifers zur Herstellung der Klemmverbindung erwartete Abstandsänderung nicht gemessen, zeigt dies an, dass die Aufnahme des Flüssigkeitsbehälters fehlgeschlagen ist, zum Beispiel weil der erwartete Flüssigkeitsbehälter nicht in der angefahrenen Aufnahmeposition vorhanden war. Wird zum Beispiel die während des horizontalen Verfahrens des Klemmgreifers zum Lösen der Klemmverbindung erwartete Abstandsänderung nicht gemessen, zeigt dies an, dass die Abgabe des Flüssigkeitsbehälters fehlgeschlagen ist, zum Beispiel weil der Flüssigkeitsbehälter zwischenzeitlich verloren wurde.

Gegenstand der vorliegenden Erfindung ist also ein Verfahren zur Überwachung des Transports eines Flüssigkeitsbehälters mit einem mittels eines flexiblen Verbindungselements an einem automatisch verfahrbaren Transferarm befestigten
passiven Klemmgreifer, das Verfahren umfassend die Schritte:
a) horizontales Verfahren des Klemmgreifers zur Herstellung einer Klemmverbindung zwischen dem Klemmgreifer und dem Flüssigkeitsbehälter in einer Startposition;
b) Anheben des Klemmgreifers zur Entnahme des Flüssigkeitsbehälters aus der Startposition;
c) horizontales Verfahren des Klemmgreifers an eine Zielposition;
d) Absenken des Klemmgreifers zur Positionierung des Flüssigkeitsbehälters in der Zielposition; und
e) horizontales Verfahren des Klemmgreifers zum Lösen der Klemmverbindung;
   wobei zumindest während der Durchführung der Verfahrensschritte a) und/oder e) kontinuierlich ein Abstand des Klemmgreifers zu dem Transferarm gemessen wird und wobei, wenn festgestellt wird, dass
   i) während des horizontalen Verfahrens des Klemmgreifers zur Herstellung der Klemmverbindung zwischen dem Klemmgreifer und dem Flüssigkeitsbehälter in der Startposition in Schritt a) oder
   ii) während des horizontalen Verfahrens des Klemmgreifers zum Lösen der Klemmverbindung in Schritt e)
   keine Änderung des Abstands des Klemmgreifers zu dem Transferarm gemessen wurde, ein Signal erzeugt wird, das anzeigt, dass ein Fehler während des Transports des Flüssigkeitsbehälters aufgetreten ist.
   Alternativ kann der Abstand des Klemmgreifers zu dem Transferarm während der Durchführung der Verfahrensschritte a) bis e), d.h. während des gesamten Transportvorgangs kontinuierlich gemessen werden. Dabei ist darauf zu achten, dass nur die Abstandsänderungen während der Aufnahme und/oder der Abgabe des Flüssigkeitsbehälters (Schritte a) und/oder e)) zur Fehlererkennung ausgewertet werden.

Ein zweites Problem ist, dass es hinsichtlich des Klemmgreifers zu Abnutzungs- und Verschleißerscheinungen kommen kann, die zu einer Verminderung der Klemmkraft führen. Dadurch steigt die Gefahr, dass es bei der Aufnahme oder beim Transport eines Flüssigkeitsbehälters zu Fehlern kommt, wie zum Beispiel zu einem wie oben beschriebenen Verlust des Flüssigkeitsbehälters. Bislang wurde dieses Risiko dadurch vermindert, indem in regelmäßigen Intervallen der Klemmgreifer vorsorglich ausgewechselt wurde. Dies hat den Nachteil, dass der Austausch wahrscheinlich immer früher als nötig erfolgte, weil nicht die tatsächliche, sondern eine auf einem Erfahrungswert beruhende, angenommene Funktionalität des Klemmgreifers für die Austauschintervalle zugrunde gelegt wurde.

Die zweite der vorliegenden Erfindung zugrundeliegende Aufgabe besteht also darin, ein Verfahren zur Überprüfung der Funktionsfähigkeit einer wie eingangs beschriebenen Vorrichtung zum Transport eines Flüssigkeitsbehälters mit einem Klemmgreifer bereit zu stellen, so dass ein Verschleiß des Klemmgreifers erkannt und der Austausch im Bedarfsfall veranlasst werden kann.

Diese Aufgabe wird ebenfalls dadurch gelöst, dass zumindest während des horizontalen Verfahrens des Klemmgreifers zur Herstellung der Klemmverbindung und/oder während des horizontalen Verfahrens des Klemmgreifers zum Lösen der Klemmverbindung kontinuierlich ein Abstand des Klemmgreifers zu dem Transferarm gemessen wird. Es wird
i) die Abstandsänderung, die während des horizontalen Verfahrens des Klemmgreifers zur Herstellung der Klemmverbindung zwischen dem Klemmgreifer und dem Flüssigkeitsbehälter in der Startposition auftritt, bestimmt und mit einem ersten vorgegebenen Grenzwert verglichen, und/oder
ii) die Abstandsänderung, die während des horizontalen Verfahrens des Klemmgreifers zum Lösen der Klemmverbindung auftritt, bestimmt und mit einem zweiten vorgegebenen Grenzwert verglichen.

Wenn mindestens eine der vorgenannten Abstandsänderungen den dazugehörigen vorgegebenen Grenzwert unterschreitet, also zu gering ist, wird ein dem Klemmgreifer zugeordnetes Austauschsignal erzeugt. Dieses Signal kann zum Beispiel dafür verwendet werden, einem Benutzer anzuzeigen, dass ein Austausch des Klemmgreifers erforderlich ist.

Ein weiteres Ausführungsbeispiel, das nicht Teil der Erfindung ist, ist also ein Verfahren zur Überprüfung der Funktionsfähigkeit einer Vorrichtung zum Transport eines Flüssigkeitsbehälters, die Vorrichtung umfassend einen mittels eines flexiblen Verbindungselements an einem automatisch verfahrbaren Transferarm befestigten Klemmgreifer, das Verfahren umfassend die Schritte:
a) horizontales Verfahren des Klemmgreifers zur Herstellung einer Klemmverbindung zwischen dem Klemmgreifer und dem Flüssigkeitsbehälter in einer Startposition;
b) Anheben des Klemmgreifers zur Entnahme des Flüssigkeitsbehälters aus der Startposition;
c) horizontales Verfahren des Klemmgreifers an eine Zielposition;
d) Absenken des Klemmgreifers zur Positionierung des Flüssigkeitsbehälters in der Zielposition; und
e) horizontales Verfahren des Klemmgreifers zum Lösen der Klemmverbindung;
   wobei zumindest während der Durchführung der Verfahrensschritte a) und/oder e) kontinuierlich ein Abstand des Klemmgreifers zu dem Transferarm gemessen wird und wobei
   i) die Abstandsänderung, die während des horizontalen Verfahrens des Klemmgreifers zur Herstellung der Klemmverbindung zwischen dem Klemmgreifer und dem Flüssigkeitsbehälter in der Startposition in Schritt a) auftritt, bestimmt wird und mit einem ersten vorgegebenen Grenzwert verglichen wird und/oder
   ii) die Abstandsänderung, die während des horizontalen Verfahrens des Klemmgreifers zum Lösen der Klemmverbindung in Schritt e) auftritt, bestimmt wird und mit einem zweiten vorgegebenen Grenzwert verglichen wird; und

wobei, wenn mindestens eine der vorgenannten Abstandsänderungen den dazugehörigen vorgegebenen Grenzwert unterschreitet, ein dem Klemmgreifer zugeordnetes Austauschsignal erzeugt wird.

Bei dem ersten und zweiten Grenzwert handelt es sich um systemspezifische Mindestabstandsänderungen, die vor Inbetriebnahme des Analysegeräts empirisch zu bestimmen und festzulegen sind. Dazu können zum Beispiel Dauertests durchgeführt werden, bei denen die Abstandsänderungen und die Verlust- oder Fehlerrate beim Behältertransportvorgang ermittelt werden. Eine starke Abnutzung des Klemmgreifers bewirkt eine verminderte Haltekraft, die zur Folge hat, dass ein Flüssigkeitsbehälter mit geringerem Kraftaufwand erfasst und freigegeben wird. Dies wiederum bewirkt, dass die Abstandsänderungen zwischen Klemmgreifer und Transferarm, die während des horizontalen Verfahrens des Klemmgreifers zum Herstellen und Lösen der Klemmverbindung üblicherweise auftreten, geringer sind als erwartet. Der erste und zweite Grenzwert ist vorzugsweise jeweils so zu wählen, dass oberhalb der Grenzwerte im Wesentlichen immer ein sicheres Erfassen, Halten und Freigeben eines Flüssigkeitsbehälters gewährleistet ist, während unterhalb der Grenzwerte, die Haltekraft des Klemmgreifers so weit reduziert ist, dass eine erhöhte Verlustrate zu erwarten ist.

Der Abstand des Klemmgreifers zu dem Transferarm kann auch während der Durchführung der Verfahrensschritte a) bis e), d.h. während des gesamten Transportvorgangs kontinuierlich gemessen werden. Dabei ist darauf zu achten, dass nur die Abstandsänderungen während der Aufnahme und/oder der Abgabe des Flüssigkeitsbehälters (Schritte a) und/oder e)) zur Überprüfung der Funktionsfähigkeit des Klemmgreifers ausgewertet werden.

Bei einem Flüssigkeitsbehälter kann es sich beispielsweise um ein Primärprobengefäß handeln, wie z.B. ein Blutentnahmeröhrchen, das eine zu analysierende Flüssigkeit enthält, oder um ein Reaktionsgefäß, wie z.B. eine transparente, röhrchenförmige Küvette, in dem eine Primärprobe mit dem oder den Reagenzien zu einem Reaktionsansatz vermischt wird, der dann in einer Messstation gemessen wird, oder um einen Reagenzflüssigkeitsbehälter, der eine Flüssigkeit, die ein oder mehrere Substanzen zum Nachweis eines oder mehrerer Analyten enthält. Der Reagenzflüssigkeitsbehälter kann ferner mehrkammrig ausgestaltet sein und mehrere, verschiedene Reagenzflüssigkeiten enthalten.

Der an dem automatisch verfahrbaren Transferarm befestigte Klemmgreifer ist vorzugsweise ein passiver Klemmgreifer zum kraftschlüssigen Erfassen und Halten eines Flüssigkeitsbehälters. Dieser kann einstückig und elastisch verformbar ausgestaltet sein. Der Klemmgreifer befindet sich vorzugsweise in einem Spannungszustand, so dass es, wenn er mit ausreichender Kraft gegen einen Flüssigkeitsbehälter gedrückt wird, zu einem Schnappeffekt kommt, und der Klemmgreifer sich öffnet und den Flüssigkeitsbehälter umgreift und festhält. Umgekehrt öffnet sich der Klemmgreifer erst wieder und gibt den Flüssigkeitsbehälter frei, wenn der Klemmgreifer mit ausreichender Kraft von einem fixierten Flüssigkeitsbehälter wegbewegt wird.

Bei dem automatisch verfahrbaren Transferarm kann es sich um einen horizontal linear verfahrbaren oder einen horizontal um einen Drehpunkt schwenkbaren Transferarm handeln. Vorzugsweise ist der Transferarm ferner vertikal beweglich.

Der Klemmgreifer ist mittels eines flexiblen Verbindungselements an dem automatisch verfahrbaren Transferarm befestigt. Das flexible Verbindungselement ist selbstrückstellend ausgestaltet, d.h. es entwickelt bei einer Auslenkung des Klemmgreifers aus einer Ruheposition Rückstellkräfte, z.B. durch Federn oder elastische Bauteile. In vorteilhafter Ausgestaltung umfasst das flexible Verbindungselement mindestens einen Körper aus Gummi, Schaumstoff oder Federstahl, so dass sich der Klemmgreifer in jede Richtung bewegen und sich aufgrund seiner Elastizität selbständig in die Ruheposition zurückbewegen kann. Das flexible Verbindungselement kann ein- oder mehrteilig ausgestaltet sein. Es können zum Beispiel mehrere Teilelemente neben- oder übereinander angeordnet werden, um eine Verdrehsicherheit zu gewährleisten.

Zur kontinuierlichen Messung eines Abstands des Klemmgreifers zu dem Transferarm ist ein Abstandssensor vorgesehen. Der Sensor ist so angebracht, dass er den Abstand zwischen einem Punkt auf dem Klemmgreifer und einem Punkt auf dem Transferarm, der sich bekanntermaßen bei einer Auslenkung des Klemmgreifers verändert, misst. Grundsätzlich eignet sich jedes denkbare Sensorsystem, wie zum Beispiel ein kapazitives Sensorsystem, ein faseroptischer Wegsensor, ein Potentiometergeber, ein Laserinterferometer etc. Ein besonders bevorzugter Abstandssensor umfasst einen Hall-Sensor und einen Magneten. Dabei ist jeweils an einem der Bauteile der Magnet und an dem anderen Bauteil der Hall-Sensor angebracht. Eine Veränderung der relativen Position des Magneten zum Hall-Sensor bedingt eine Veränderung des erzeugten Magnetfeldes im Hall-Sensor und ermöglicht so die Messung der Abstandsänderung. Durch die selbstrückstellenden Eigenschaften des flexiblen Verbindungselements ist der Magnet dann, wenn keine Kraft auf den Klemmgreifer einwirkt, stets im selben Abstand zum Hall-Sensor, so dass hier stets dasselbe Magnetfeld anliegt. Vorteilhafterweise ist der Hall-Sensor an dem Transferarm und der Magnet an dem Klemmgreifer angeordnet. Grundsätzlich ist der Aufbau zur Abstandsmessung jedoch symmetrisch austauschbar.

Das Signal, das anzeigt, dass ein Fehler während des Transports eines Flüssigkeitsbehälters aufgetreten ist und/oder das dem Klemmgreifer zugeordnete Austauschsignal ist vorzugsweise ein für einen Benutzer visuell oder akustisch wahrnehmbares Signal. Akustische Signale können z.B. von einem Lautsprecher abgegeben werden. Optische Signale können z.B. auf einem Bildschirm in Form eines Piktogramms oder einer Textnachricht dargestellt werden oder in Form eines Lichtsignals von einer Lampe abgegeben werden.

Dies stellt sicher, dass ein Benutzer über einen Vorfall informiert wird und rechtzeitig notwendige Maßnahmen zur Behebung etwaiger Verschmutzungen oder zum Austausch des Klemmgreifers ergreifen kann.

Ein weiterer Aspekt der vorliegenden Erfindung ist ein automatisches Analysegerät mit
- einer Vorrichtung zum Transports eines Flüssigkeitsbehälters, die Vorrichtung umfassend
   - einen automatisch verfahrbaren Transferarm, an dem ein passiver Klemmgreifer mittels eines flexiblen Verbindungselements befestigt ist und
   - einen Abstandssensor für die kontinuierliche Messung eines Abstands des Klemmgreifers zu dem Transferarm; und mit
- mehreren Aufnahmepositionen für die Aufnahme jeweils eines Flüssigkeitsbehälters und mit
- einer Steuereinrichtung, die so konfiguriert ist, dass sie das vorbeschriebene Verfahren zur Überwachung des Transports eines
   Flüssigkeitsbehälters und/oder zur Überprüfung der Funktionsfähigkeit der Vorrichtung zum Transport eines Flüssigkeitsbehälters steuert.

Eine Steuereinrichtung zur Steuerung eines Verfahrens zur Überwachung des Transports eines Flüssigkeitsbehälters ist insbesondere so konfiguriert, dass sie ein Verfahren mit den folgenden Schritten steuert:
a) horizontales Verfahren des Klemmgreifers zur Herstellung einer Klemmverbindung zwischen dem Klemmgreifer und dem Flüssigkeitsbehälter in einer Startposition;
b) Anheben des Klemmgreifers zur Entnahme des Flüssigkeitsbehälters aus der Startposition;
c) horizontales Verfahren des Klemmgreifers an eine Zielposition;
d) Absenken des Klemmgreifers zur Positionierung des Flüssigkeitsbehälters in der Zielposition; und
e) horizontales Verfahren des Klemmgreifers zum Lösen der Klemmverbindung;
   wobei zumindest während der Durchführung der Verfahrensschritte a) und/oder e) kontinuierlich ein Abstand des Klemmgreifers zu dem Transferarm gemessen wird und wobei, wenn festgestellt wird, dass
   i) während des horizontalen Verfahrens des Klemmgreifers zur Herstellung der Klemmverbindung zwischen dem Klemmgreifer und dem Flüssigkeitsbehälter in der Startposition in Schritt a) oder
   ii) während des horizontalen Verfahrens des Klemmgreifers zum Lösen der Klemmverbindung in Schritt e)
   keine Änderung des Abstands des Klemmgreifers zu dem Transferarm gemessen wurde, ein Signal erzeugt wird, das anzeigt, dass ein Fehler während des Transports des Flüssigkeitsbehälters aufgetreten ist.

Eine Steuereinrichtung zur Überprüfung der Funktionsfähigkeit der Vorrichtung zum Transport eines Flüssigkeitsbehälters ist insbesondere so konfiguriert, dass sie ein Verfahren mit den folgenden Schritten steuert:
a) horizontales Verfahren des Klemmgreifers zur Herstellung einer Klemmverbindung zwischen dem Klemmgreifer und dem Flüssigkeitsbehälter in einer Startposition;
b) Anheben des Klemmgreifers zur Entnahme des Flüssigkeitsbehälters aus der Startposition;
c) horizontales Verfahren des Klemmgreifers an eine Zielposition;
d) Absenken des Klemmgreifers zur Positionierung des Flüssigkeitsbehälters in der Zielposition; und
e) horizontales Verfahren des Klemmgreifers zum Lösen der Klemmverbindung;
   wobei zumindest während der Durchführung der Verfahrensschritte a) und/oder e) kontinuierlich ein Abstand des Klemmgreifers zu dem Transferarm gemessen wird und wobei
   i) die Abstandsänderung, die während des horizontalen Verfahrens des Klemmgreifers zur Herstellung der Klemmverbindung zwischen dem Klemmgreifer und dem Flüssigkeitsbehälter in der Startposition in Schritt a) auftritt, bestimmt wird und mit einem ersten vorgegebenen Grenzwert verglichen wird und/oder
   ii) die Abstandsänderung, die während des horizontalen Verfahrens des Klemmgreifers zum Lösen der Klemmverbindung in Schritt e) auftritt, bestimmt wird und mit einem zweiten vorgegebenen Grenzwert verglichen wird; und
wobei, wenn mindestens eine der vorgenannten Abstandänderungen den dazugehörigen vorgegebenen Grenzwert unterschreitet, ein dem Klemmgreifer zugeordnetes Austauschsignal erzeugt wird.

Unter einer "Aufnahmeposition für einen Flüssigkeitsbehälter" ist ein Ort gemeint, der für die Platzierung eines Flüssigkeitsbehälters vorgesehen ist. Dabei handelt es sich häufig um eine baulich angepasste Aufnahmevorrichtung, die eine standsichere Aufbewahrung des Flüssigkeitsbehälters ermöglicht, wie beispielsweise Hülsen, in die ein spezifisch ausgestalteter Flüssigkeitsbehälter formschlüssig eingeführt werden kann. In einem automatischen Analysegerät sind in erster Linie Aufnahmepositionen für Primärprobengefäße, Reaktionsgefäße (üblicherweise in Form von transparenten, röhrchenförmigen Küvetten) und für Reagenzflüssigkeitsbehälter vorgesehen. Die Aufnahmepositionen befinden sich an definierten Positionen, wie z.B. in beweglichen Aufnahmeeinrichtungen, wie beispielsweise drehbaren Küvetten- oder Reagenztellern, oder stationären Vorratsbehältern.

In einer bevorzugten Ausführungsform eines automatischen Analysegeräts umfasst der Abstandssensor für die kontinuierliche Messung eines Abstands des Klemmgreifers zu dem Transferarm einen Magneten und einen Hallsensor (siehe auch oben).

Vorzugsweise umfasst das automatische Analysegerät ferner ein Ausgabemedium zur Anzeige des Signals, das anzeigt, dass ein Fehler während des Transports des Flüssigkeitsbehälters aufgetreten ist und/oder des dem Klemmgreifer zugeordneten Austauschsignals. Bei dem Ausgabemedium kann es sich zum Beispiel um einen Bildschirm, einen Lautsprecher oder eine Lampe handeln (siehe auch oben).

Die Erfindung wird im Folgenden anhand einer Zeichnung erläutert.

Darin zeigen
- FIG. 1: ein erfindungsgemäßes automatisches Analysegerät;
- FIG. 2: die schematische Darstellung des Vorgangs des Absetzens einer Küvette;
- FIG. 3: eine Darstellung des Hallsensorsignals während des Vorgangs des Absetzens einer Küvette.

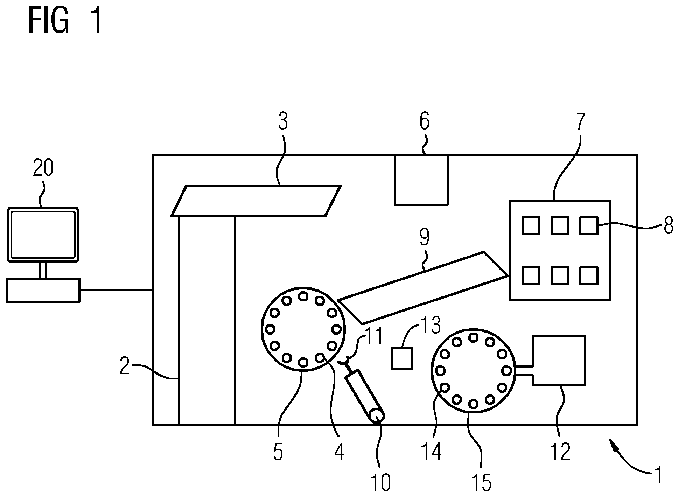

FIG. 1 ist eine schematische Darstellung eines automatischen Analysegeräts 1 mit einigen darin enthaltenen Bauteilen. Hierbei werden nur die wichtigsten Bauteile stark vereinfacht dargestellt, um die grundsätzliche Funktion des automatischen Analysegeräts 1 zu erläutern, ohne hierbei detailliert die einzelnen Teile jedes Bauteils darzustellen.

Das automatische Analysegerät 1 ist dafür ausgebildet, vollautomatisch verschiedenste Analysen von Blut oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Flüssigkeitsbehälter ausgetauscht werden müssen.

Die Patientenproben werden dem automatischen Analysegerät 1 in Primärprobengefäßen auf nicht näher dargestellten Schlitten über eine Zuführungsschiene 2 zugeführt. Informationen hinsichtlich der pro Probe durchzuführenden Analysen können beispielsweise mittels auf den Probengefäßen angebrachten Strichcodes übergeben werden, die in dem automatischen Analysegerät 1 ausgelesen werden. Aus den Probengefäßen werden mit Hilfe einer ersten Pipettiervorrichtung 3 Probenaliquots mittels einer Pipettiernadel entnommen.

Die Probenaliquots werden ebenfalls nicht näher dargestellten Küvetten zugeführt, die in Aufnahmepositionen 4 einer drehbaren, auf 37 °C temperierten Inkubationseinrichtung 5 angeordnet sind. Die Küvetten werden aus einem Küvettenvorratsbehälter 6 entnommen. In dem auf ca. 8-10 °C gekühlten Reagenzgefäßvorratsbehälter 7 werden Reagenzgefäße 8 mit verschiedenen Reagenzflüssigkeiten aufbewahrt. Reagenzflüssigkeit wird mittels der Pipettiernadel einer zweiten Pipettiervorrichtung 9 aus einem Reagenzgefäß 8 entnommen und zur Bereitstellung eines Reaktionsansatzes in eine Küvette, die bereits ein Probenaliquot enthält, abgegeben. Die Küvette mit dem Reaktionsansatz wird von dem Transferarm 10 mit einem Klemmgreifer 11 aus einer Aufnahmeposition 4 der Inkubationseinrichtung 5 entnommen und zum Durchmischen des Reaktionsansatzes zu einer Schütteleinrichtung 13 transferiert. Nach Beendigung des Mischvorgangs wird die Küvette weiter in eine Aufnahmeposition 14 der drehbaren Aufnahmevorrichtung 15 für die photometrische Messstation 12 transportiert, wo die Extinktion des Reaktionsansatzes gemessen wird. Beispielsweise während dieses Transportvorgangs oder auch während des Schüttelns kann es passieren, dass eine befüllte Küvette verloren geht.

Der gesamte Prozess wird von einer Steuereinheit 20, wie z.B. von einem über eine Datenleitung angeschlossenen Rechner gesteuert, unterstützt durch eine Vielzahl weiterer, nicht näher dargestellter elektronischer Schaltungen und Mikroprozessoren innerhalb des automatischen Analysegeräts 1 und seiner Bauteile.

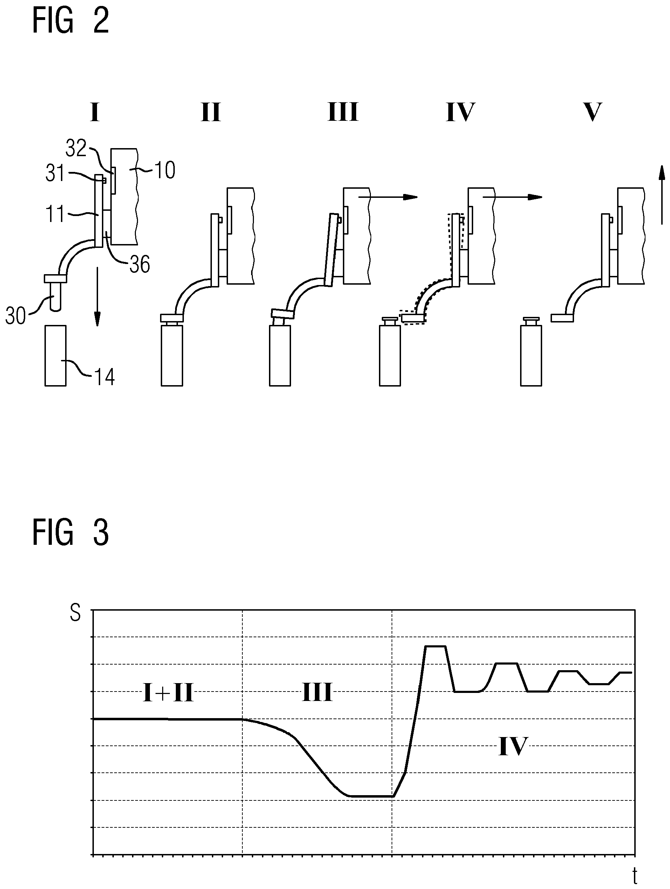

FIG. 2 zeigt von links nach rechts den Vorgang des automatischen Absetzens einer Küvette 30. FIG. 3 zeigt die dazugehörige Veränderung des Hallsensorsignals während dieses Vorgangs. In der ersten Phase I der Sequenz in FIG. 2 ist die Transportvorrichtung bereits in eine Position gebracht, so dass sich die Küvette 30 bereits oberhalb der Ziel-Aufnahmeposition 14 befindet. Durch Absenken des Transferarms 10 in Pfeilrichtung wird die in dem Klemmgreifer 11 gehaltene Küvette 30 genau in die Öffnung der Ziel-Aufnahmeposition 14 eingeführt, so dass in Phase II der Sequenz die Küvette 30 schließlich in der Aufnahmeposition 14 platziert ist. Während des Absenkens der Küvette 30 und während des Einführens wirken außer der konstanten Gewichtskraft der Küvette 30 keine weiteren Kräfte auf den Klemmgreifer 11 ein, die eine Abstandsänderung zwischen Klemmgreifer 11 (bzw. dem daran befestigten Magneten 31) und Transferarm 10 (bzw. dem daran befestigten Hallsensor 32) bewirken würden. Demzufolge misst der Hallsensor in den Phasen I und II, wie in FIG. 3 zu erkennen, ein konstantes Signal S über die Zeit t.

In der dritten Phase III der Sequenz in FIG. 2 wird die Transportvorrichtung horizontal nach rechts in Pfeilrichtung verfahren. Die Küvette 30 in der Aufnahmeposition 14 wirkt in entgegengesetzter Richtung auf den Klemmgreifer 11, so dass der Klemmgreifer 11 ausgelenkt wird und immer weiter in Richtung Transferarm 10 kippt. Dadurch verringert sich der Abstand in der Position zwischen Klemmgreifer 11 und Transferarm 10, in der der Magnet 31 und der Hallsensor 32 angebracht sind, messbar. Demzufolge misst der Hallsensor in Phase III, wie in FIG. 3 zu erkennen, eine Veränderung des Signals S über die Zeit t.

In der vierten Phase IV der Sequenz in FIG. 2 wird die Transportvorrichtung weiter horizontal nach rechts in Pfeilrichtung verfahren, und es ist der Moment gezeigt, in dem die Kraft, die durch die Küvette 30 auf den Klemmgreifer 11 ausgeübt wird, so groß ist, dass der Klemmgreifer 11 aufschnappt und die Küvette 30 freigibt. Durch die Rückstellkräfte des elastischen Verbindungselements 36 wird der Klemmgreifer 11 zurück in eine Ruheposition bewegt, wobei bis zur Einstellung der Ruheposition der Klemmgreifer noch kurz nachschwingt. Demzufolge misst der Hallsensor in Phase IV, wie in FIG. 3 zu erkennen, eine zunächst sprunghafte Veränderung des Signals S und dann Signaländerungen mit immer kleiner werdender Amplitude, bis sich schließlich wieder ein konstantes Signal einstellt, wenn keine auslenkende Kraft mehr auf den Klemmgreifer 11 einwirkt.

In der fünften Phase V der Sequenz in FIG. 2 ist der Vorgang des Absetzens bereits abgeschlossen, und der Transferarm 10 wird nach oben in Pfeilrichtung bewegt, um die nächste Küvette in einer Startposition aufzunehmen.

Wird beim Absetzen einer Küvette zum Beispiel die in Phase III erwartete Abstandsänderung nicht gemessen, sondern das Hallsensorsignal bleibt auch in Phase III konstant, zeigt dies an, dass die Abgabe der Küvette fehlgeschlagen ist und deshalb ein Fehler vorliegt, wie zum Beispiel ein Verlust der Küvette auf dem Transportweg.

### BEZUGSZEICHENLISTE

- 1: Analysegerät
- 2: Zuführungsschiene
- 3: Pipettiervorrichtung
- 4: Aufnahmeposition
- 5: Inkubationseinrichtung
- 6: Küvettenvorratsbehälter
- 7: Reagenzgefäßvorratsbehälter
- 8: Reagenzgefäß
- 9: Pipettiervorrichtung
- 10: Transferarm
- 11: Klemmgreifer
- 12: Messstation
- 13: Schütteleinrichtung
- 14: Aufnahmeposition
- 15: Aufnahmevorrichtung
- 20: Steuereinheit
- 30: Küvette
- 31: Magnet
- 32: Hallsensor
- 36: flexibles Verbindungselement

## Patentansprüche

1. Verfahren zur Überwachung des Transports eines Flüssigkeitsbehälters (30) mit einem mittels eines flexiblen Verbindungselements (36) an einem automatisch verfahrbaren Transferarm (10) befestigten passiven Klemmgreifer (11), das Verfahren umfassend die Schritte:
a) horizontales Verfahren des Klemmgreifers (11) zur Herstellung einer Klemmverbindung zwischen dem Klemmgreifer (11) und dem Flüssigkeitsbehälter (30) in einer Startposition;
b) Anheben des Klemmgreifers (11) zur Entnahme des Flüssigkeitsbehälters (30) aus der Startposition;
c) horizontales Verfahren des Klemmgreifers (11) an eine Zielposition;
d) Absenken des Klemmgreifers (11) zur Positionierung des Flüssigkeitsbehälters (30) in der Zielposition; und
e) horizontales Verfahren des Klemmgreifers (11) zum Lösen der Klemmverbindung;
wobei zumindest während der Durchführung der Verfahrensschritte a) und/oder e) kontinuierlich ein Abstand des Klemmgreifers (11) zu dem Transferarm (10) gemessen wird und wobei, wenn festgestellt wird, dass
i) während des horizontalen Verfahrens des Klemmgreifers (11) zur Herstellung der Klemmverbindung zwischen dem Klemmgreifer (11) und dem Flüssigkeitsbehälter (30) in der Startposition in Schritt a) oder
ii) während des horizontalen Verfahrens des Klemmgreifers (11) zum Lösen der Klemmverbindung in Schritt e)
keine Änderung des Abstands des Klemmgreifers (11) zu dem Transferarm (10) gemessen wurde, ein Signal erzeugt wird, das anzeigt, dass ein Fehler während des Transports des Flüssigkeitsbehälters (30) aufgetreten ist.

2. Verfahren gemäß Anspruch 1, wobei der Abstand des Klemmgreifers (11) zu dem Transferarm (10) mit Hilfe eines Magneten (31) und eines Hallsensors (32) gemessen wird.

3. Verfahren gemäß einem der vorhergehenden Ansprüche, wobei der Flüssigkeitsbehälter (30) ein Reaktionsgefäß ist.

4. Automatisches Analysegerät (1) mit
• einer Vorrichtung zum Transport eines Flüssigkeitsbehälters, die Vorrichtung umfassend
- einen automatisch verfahrbaren Transferarm (10), an dem ein passiver Klemmgreifer (10) mittels eines flexiblen Verbindungselements (36) befestigt ist und
- einen Abstandssensor (31, 32) für die kontinuierliche Messung eines Abstands des Klemmgreifers (11) zu dem Transferarm (10); und mit
• mehreren Aufnahmepositionen (4, 14) für die Aufnahme jeweils eines Flüssigkeitsbehälters und mit
• einer Steuereinrichtung, die so konfiguriert ist, dass sie ein Verfahren zur Überwachung des Transports eines Flüssigkeitsbehälters mit den folgenden Schritten steuert:
a) horizontales Verfahren des Klemmgreifers (11) zur Herstellung einer Klemmverbindung zwischen dem Klemmgreifer (11) und dem Flüssigkeitsbehälter in einer Startposition (4);
b) Anheben des Klemmgreifers (11) zur Entnahme des Flüssigkeitsbehälters aus der Startposition (4);
c) horizontales Verfahren des Klemmgreifers (11) an eine Zielposition (14);
d) Absenken des Klemmgreifers (11) zur Positionierung des Flüssigkeitsbehälters in der Zielposition (14); und
e) horizontales Verfahren des Klemmgreifers (11) zum Lösen der Klemmverbindung;
wobei zumindest während der Durchführung der Verfahrensschritte a) und/oder e) kontinuierlich ein Abstand des Klemmgreifers (11) zu dem Transferarm (10) gemessen wird und wobei, wenn festgestellt wird, dass
i) während des horizontalen Verfahrens des Klemmgreifers (11) zur Herstellung der Klemmverbindung zwischen dem Klemmgreifer (11) und dem Flüssigkeitsbehälter in der Startposition (4) in Schritt a) oder
ii) während des horizontalen Verfahrens des Klemmgreifers (11) zum Lösen der Klemmverbindung in Schritt e)
keine Änderung des Abstands des Klemmgreifers (11) zu dem Transferarm (10) gemessen wurde, ein Signal erzeugt wird, das anzeigt, dass ein Fehler während des Transports des Flüssigkeitsbehälters aufgetreten ist.

5. Automatisches Analysegerät (1) gemäß Anspruch 4, wobei der Abstandssensor für die kontinuierliche Messung eines Abstands des Klemmgreifers (11) zu dem Transferarm (11) einen Magneten (31) und einen Hallsensor (32) umfasst.

6. Automatisches Analysegerät (1) gemäß einem der Ansprüche 4 und 5, welches ferner ein Ausgabemedium umfasst und wobei das Ausgabemedium das Signal, das anzeigt, dass ein Fehler während des Transports des Flüssigkeitsbehälters aufgetreten ist, in ein visuell und/oder in ein akustisch wahrnehmbares Signal umwandelt und dieses anzeigt.

## Claims

1. Method for monitoring the transport of a liquid container (30) by way of a passive clamping gripper (11) which is fastened by means of a flexible connecting element (36) to an automatically movable transfer arm (10), the method comprising the steps of:
a) moving the clamping gripper (11) horizontally to establish a clamping connection between the clamping gripper (11) and the liquid container (30) in a start position;
b) lifting the clamping gripper (11) to remove the liquid container (30) from the start position;
c) moving the clamping gripper (11) horizontally to a target position;
d) lowering the clamping gripper (11) to position the liquid container (30) in the target position; and
e) moving the clamping gripper (11) horizontally to release the clamping connection;
wherein a distance from the clamping gripper (11) to the transfer arm (10) is measured continuously at least while the method steps/step a) and/or e) are being carried out, and wherein, if it is determined that,
i) during the horizontal movement of the clamping gripper (11) to establish the clamping connection between the clamping gripper (11) and the liquid container (30) in the start position in step a), or,
ii) during the horizontal movement of the clamping gripper (11) to release the clamping connection in step e),
no change in the distance from the clamping gripper (11) to the transfer arm (10) has been measured, a signal indicating that an error has occurred during the transport of the liquid container (30) is generated.

2. Method according to Claim 1, wherein the distance from the clamping gripper (11) to the transfer arm (10) is measured with the aid of a magnet (31) and a Hall sensor (32).

3. Method according to either of the preceding claims, wherein the liquid container (30) is a reaction vessel.

4. Automatic analyser (1), having
• a device for transporting a liquid container, the device comprising
- an automatically movable transfer arm (10), to which a passive clamping gripper (10) is fastened by means of a flexible connecting element (36), and
- a distance sensor (31, 32) for continuously measuring a distance from the clamping gripper (11) to the transfer arm (10); and having
• multiple holding positions (4, 14) for holding in each case one liquid container, and having
• a control unit which is configured such that it controls a method for monitoring the transport of a liquid container comprising the following steps:
a) moving the clamping gripper (11) horizontally to establish a clamping connection between the clamping gripper (11) and the liquid container in a start position (4);
b) lifting the clamping gripper (11) to remove the liquid container from the start position (4);
c) moving the clamping gripper (11) horizontally to a target position (14);
d) lowering the clamping gripper (11) to position the liquid container in the target position (14); and
e) moving the clamping gripper (11) horizontally to release the clamping connection;
wherein a distance from the clamping gripper (11) to the transfer arm (10) is measured continuously at least while the method steps/step a) and/or e) are being carried out, and wherein, if it is determined that,
i) during the horizontal movement of the clamping gripper (11) to establish the clamping connection between the clamping gripper (11) and the liquid container in the start position (4) in step a), or,
ii) during the horizontal movement of the clamping gripper (11) to release the clamping connection in step e),
no change in the distance from the clamping gripper (11) to the transfer arm (10) has been measured, a signal indicating that an error has occurred during the transport of the liquid container is generated.

5. Automatic analyser (1) according to Claim 4, wherein the distance sensor for continuously measuring a distance from the clamping gripper (11) to the transfer arm (11) comprises a magnet (31) and a Hall sensor (32).

6. Automatic analyser (1) according to either of Claims 4 and 5, furthermore having an output medium, and wherein the output medium converts the signal indicating that an error has occurred during the transport of the liquid container into a visually and/or into an acoustically perceptible signal and displays the latter.

## Revendications

1. Procédé de contrôle du transport d'un récipient (30) à liquide, comprenant une griffe (11) de serrage passive fixée au moyen d'un élément (36) souple de liaison à un bras (10) de transfert pouvant être déplacé automatiquement, le procédé comprenant les stades :
a) déplacement horizontale de la griffe (11) de serrage pour produire une jonction par serrage entre la griffe (11) de serrage et le récipient (30) à liquide dans une position de début ;
b) soulèvement de la griffe (11) de serrage pour prélever le récipient (30) à liquide de la position de début ;
c) déplacement horizontal de la griffe (11) de serrage à une position cible ;
d) abaissement de la griffe (11) de serrage pour la mise en position du récipient (30) à liquide dans la position cible ;
e) déplacement horizontal de la griffe (11) de serrage pour faire cesser la liaison de serrage ;
dans lequel, au moins pendant que les stades a) et/ou e) du procédé sont effectués, on mesure continuellement une distance de la griffe (11) de serrage au bras (10) de transport et dans lequel, si l'on constate que
i) pendant le déplacement horizontal de la griffe (11) de serrage pour produire la jonction par serrage entre la griffe (11) de serrage et le récipient (30) à liquide dans la position de début au stade a) ou
ii) pendant le déplacement horizontal de la griffe (11) de serrage pour faire cesser la jonction par serrage au stade e)
qu'im n'a pas été mesurée de variation de la distance de la griffe (11) de serrage au bras (10) de transfert, on produit un signal, qui indique qu'il s'est produit un défaut pendant le transport du récipient (30) à liquide.

2. Procédé suivant la revendication 1, dans lequel on mesure la distance de la griffe (11) de serrage au bras (10) de transport à l'aide d'un aimant (31) et d'un capteur (32) de Hall.

3. Procédé suivant l'une des revendications précédentes, dans lequel le récipient (30) à liquide est un tube à essai.

4. Appareil (1) d'analyse automatique comprenant
• un système de transport d'un récipient à liquide, le système comprenant
- un bras (10) de transport, qui peut se déplacer automatiquement et auquel est fixée une griffe (10) de serrage passive au moyen d'un élément (36) souple de liaison ; et
- un capteur (31, 32) de distance pour mesurer en continu une distance de la griffe (11) de serrage au bras (10) de transfert ; et comprenant
• plusieurs position de réception pour recevoir, respectivement, un récipient à liquide et comprenant
• un dispositif de commande configuré de manière à commander un procédé de contrôle du transport d'un récipient à liquide ayant les stades suivants :
a) déplacement horizontale de la griffe (11) de serrage pour produire une jonction par serrage entre la griffe (11) de serrage et le récipient (30) à liquide dans une position de début ;
b) soulèvement de la griffe (11) de serrage pour prélever le récipient (30) à liquide de la position de début ;
c) déplacement horizontal de la griffe (11) de serrage à une position cible ;
d) abaissement de la griffe (11) de serrage pour la mise en position du récipient (30) à liquide dans la position cible ;
e) déplacement horizontal de la griffe (11) de serrage pour faire cesser la jonction par serrage ;
dans lequel, au moins pendant que les stades a) et/ou e) du procédé sont effectués, on mesure continuellement une distance de la griffe (11) de serrage au bras (10) de transport et dans lequel, si l'on constate que
i) pendant le déplacement horizontal de la griffe (11) de serrage pour produire la jonction par serrage entre la griffe (11) de serrage et le récipient (30) à liquide dans la position de début au stade a) ou
ii) pendant le déplacement horizontal de la griffe (11) de serrage pour faire cesser la jonction par serrage au stade e)
qu'il n'a pas été mesurée de variation de la distance de la griffe (11) de serrage au bras (10) de transfert, on produit un signal, qui indique qu'il s'est produit un défaut pendant le transport du récipient (30) à liquide.

5. Appareil (1) d'analyse automatique suivant la revendication 4, dans lequel le capteur de distance pour mesurer continuellement une distance de la griffe (11) de serrage au bras (11) de transfert comprend un aimant (31) et un capteur (32) de Hall.

6. Appareil (1) d'analyse automatique suivant l'une des revendications 4 et 5, qui comprend, en outre, un agent de sortie et dans lequel l'agent de sortie transforme le signal qui indique qu'un défaut s'est produit pendant le transport du récipient à liquide en un signal perceptible visuellement et/ou acoustiquement et l'indique.
